# EUROPEAN PATENT SPECIFICATION

(11) **EP 3 266 854 B1**
(45) Date of publication and mention of the grant of the patent: **04.12.2019**
(21) Application number: 16758449.9
(22) Date of filing: 26.02.2016
(51) Int. Cl.: C10G 65/12, C10G 65/14, C10G 45/02, C10G 47/00

(54) **DIESEL OIL AND JET FUEL PRODUCTION SYSTEM AND METHOD UTILIZING FISCHER-TROPSCH SYNTHETIC OIL**
DIESELÖL- UND DÜSENTREIBSTOFFHERSTELLUNGSSYSTEM UND -VERFAHREN MIT VERWENDUNG VON SYNTHETISCHEM FISCHER-TROPSCH-ÖL
SYSTÈME DE PRODUCTION DE GAZOLE ET DE CARBURÉACTEUR ET PROCÉDÉ UTILISANT UNE HUILE DE SYNTHÈSE FISCHER-TROPSCH

(30) Priority: 05.03.2015 CN 201510097716
(43) Date of publication of application: 10.01.2018
(73) Proprietor: Wuhan Kaidi Engineering Technology Research Institute Co., Ltd., Wuhan, Hubei 430223 (CN)
(72) Inventor: ZHAO, Tao, Wuhan Hubei 430212 (CN); LAI, Bo, Wuhan Hubei 430212 (CN); YANG, Weiguang, Wuhan Hubei 430212 (CN); WANG, Dawei, Wuhan Hubei 430212 (CN); HAO, Xuewen, Wuhan Hubei 430212 (CN); ZHOU, Yanjie, Wuhan Hubei 430212 (CN); XU, Li, Wuhan Hubei 430212 (CN)
(74) Representative: Zeuner Summerer Stütz
(86) International application number: PCT/CN2016/074634
(87) International publication number: WO 2016/138833

(56) References cited:
- AU-A1- 2008 304 882
- CN-A- 1 854 264
- CN-A- 1 854 265
- CN-A- 103 146 426
- CN-A- 103 146 426
- CN-A- 103 205 274
- CN-A- 104 711 019
- US-A1- 2004 267 070
- US-A1- 2005 092 653

## Description

### FIELD OF THE INVENTION

The invention relates to the technical field of the deep processing of Fischer-Tropsch synthetic oil, and more particularly to a system and method for producing diesel fuel and jet fuel using Fischer-Tropsch synthetic oil.

### BACKGROUND OF THE INVENTION

At present, the main energy source is fossil energy in the world. Petroleum is the main source of motor fuel. Petroleum belongs to nonrenewable energy, is drying up with each passing day and becomes increasingly heavier and poorer. Due to increasingly strict environmental protection laws and regulations, the sustainable economic growth of the world needs production of a lot of light clean fuel. All raise a demand for improving the current oil refining techniques, adding new substitutes for petroleum and manufacturing products that meet requirements at the lowest cost. Catalytic cracking is one of the important methods for turning heavy oil into light oil. However, due to the inferior and heavier catalytic cracking materials, the operating conditions become increasingly strict, and the yield and properties of light products become poor. The hydroprocessing technique of catalytic cracking materials can reduce the content of impurities such as sulfur, nitrogen and metal, improve the cracking performance of charged materials, lower the operating severity of FCC (fluid catalytic cracking), improve product distribution, increase target product selectivity, reduce the productivity of dry gas and coke, enhance the economic efficiency of FCC devices, reduce the sulfur content of targeted products and lower the content of SOx and NOx in regenerated flue gas.

China is a country which has abundant coal resources but lacks petroleum. In 2009, China imported 199 million-ton crude oil in total and China's oil dependency already exceeded 51.3%. It is predicated that China's oil dependency will exceed 60% in 2020. The fluctuations and changes of the international oil market will directly affect the economic and even political safety and stability of China. Solving the supply and demand problem of fluid fuel through non-petroleum synthetic fluid fuel not only meets the safety requirements of the national energy strategies but also plays an important role in guaranteeing the long-term stable and sustainable growth of national economy. Among many substitute energy techniques, the Fischer-Tropsch synthesis technique has become a popular technical development point of all countries and major petroleum companies. The material sources of Fischer-Tropsch synthesis are wide. Coal, natural gas, associated gas of oilfields and light-hydrocarbon and inferior residual oil of refineries can be used as production materials of synthesis gas.

The fluid fuel produced by adopting the Fischer-Tropsch synthesis technique features good combustion performance and little emission pollution and is called clean energy. Therefore, developing alternative energy sources for petroleum is one of the most feasible measures for solving the problems of short supply of petroleum and national energy safety. When the Fischer-Tropsch synthesis products can be turned into fluid fuel by high-efficient clean techniques on a large scale, the short supply of oil products will be effectively alleviated and promote continuous stable economic development. Fischer-Tropsch synthesis products are quite different from oil products in terms of hydrocarbons and main nature, mainly comprise alkane and olefin and have an extremely low content of sulfur and nitrogen but a certain content of oxygen. Up-to-standard fluid fuel and chemicals can be obtained only after the corresponding hydro-upgrading of all fractions of Fischer-Tropsch synthesis. Generally, hydroprocessing of fluid hydrocarbons and synthetic wax can produce diesel fuel, jet fuel, gasoline, naphtha, refined wax and other products.

The Fischer-Tropsch synthetic oil is characterized by no sulfur, no nitrogen and no aromatic hydrocarbons and is an eco-friendly fuel oil and chemical. However, synthetic crude oil contains a lot of hydrocarbons and a certain amount of oxygenated compounds. In particular, acidic oxygenated compounds corrode equipment seriously and are not good for further processing and utilization of synthetic crude oil products. Therefore, proper methods must be adopted for hydrodeoxygenation and olefin saturation of Fischer-Tropsch synthetic oil. As one of the main objectives of the Fischer-Tropsch synthesis technique, producing diesel fuel is an important task of synthetic oil plants. Some problems exist in producing diesel fuel by hydroprocessing of traditional low-temperature synthetic oil and high-temperature synthetic oil. Due to the characteristics of low-temperature synthetic oil, the hydroprocessed diesel fraction has a high condensation point and a low density and can't be sold as diesel products directly. Since high-temperature synthetic oil has a higher content of olefin and alkadiene, it is very easy to coke during hydroprocessing and thus the period of device operation is shortened.

Major research institutes have developed a plurality of relevant techniques for the hydro-upgrading of Fischer-Tropsch synthetic oil to improve the high-temperature and low-temperature Fischer-Tropsch synthetic oil. However, the known techniques have some shortcomings:

U. S. Pat. Pub. No. 6309432 discloses a method for processing and upgrading Fischer-Tropsch synthetic oil. First, the method separates Fischer-Tropsch synthetic oil into light and heavy fractions at 371 °C. The light fraction lower than 371 °C produces the fraction whose temperature ranges between 246 °C and 371 °C and the fraction whose temperature ranges between C5 and 246 °C after passing through the thermal separation system and the cold separation in succession. The fraction whose temperature ranges between 246 °C and 371 °C and the heavy fraction whose temperature is higher than 371 °C passes through the hydro-isocracking reactor. During olefin saturation and hydrodeoxygenation, the hydroisomerization and hydrocracking of n-alkenes happen. The main products of isomerization are mono-methyl branching hydrocarbons. The fraction whose temperature ranges between C5 and 246 °C doesn't go through hydroprocessing but enters the fractionating column after mixing with the products from the hydrocracking reactor to obtain corresponding fractions like jet fuel by separation. Since Fischer-Tropsch synthetic oil has a higher content of olefin and oxygen, when Fischer-Tropsch synthetic oil has a direct contact with an isocracking catalyst, the stability and operation period of the catalyst is affected and the product quality is poorer.

Chinese Patent Publication No. CN15944509A discloses a method for adopting a Fe-based catalyst for hydro-conversion of Fischer-Tropsch synthesis heavy hydrocarbons or kettle bottom wax to produce naphtha and diesel products. The specific method is that the Fe-based catalyst and the Fischer-Tropsch synthesis heavy hydrocarbons or kettle bottom wax are mixed evenly in the storage tank, then are mixed with hydrogen and heated to a temperature of between 300 °C and 400 °C, and enter the suspension bed reactor for hydrocracking and isomerization reactions. The reaction pressure of hydro-conversion ranges between3.0 MPa and 20.0 MPa; the reaction temperature of hydro-conversion ranges between 350 °C and 500 °C; the volume ratio of hydrogen to oil ranges between 300 and 1800; and the liquid hourly space velocity ranges between 0.1⁻¹ and 3.0 h⁻¹. The hydroprocessing of the suspension bed technique is weaker, the reaction conditions are strict and the product properties are poorer. In addition, the hydrofining reactor of the suspension bed adopts the upward material-feeding method. Therefore, it is difficult to avoid the problems that the bed temperature gradient and the pressure drop are greater, the top of the reactor is easy to coke, hydrogen needs to be circulated, a circulating hydrogen compressor needs to be provided, and the equipment investment and the operation cost are higher.

Chinese Patent Application No. CN200510068181.2 discloses an integrated method for hydro-upgrading of Fischer-Tropsch synthetic oil. The method mixes the full-range fractions of Fischer-Tropsch synthetic oil and hydrogen to enter a hydrofining reactor for hydrodeoxygenation and olefin saturation reactions under the action of hydrofining catalysts. The hydrofining synthetic oil after high-pressure and low-pressure separation in succession enters a fractionating column for separation. After light and heavy naphtha, kerosene and diesel fractions are separated out, tail oil at the bottom of fractionating column enters a hydrocracking reactor. Under the action of the hydro-isocracking catalyst, heavy fractions are converted into middle distillates to the greatest extent. The products of the hydrocracking reactor and the products of hydrofining reactions mix and then enter the fractionating column for separation to obtain target products after high-pressure and low-pressure separation in succession. The disadvantages of the invention are that an integrated process is adopted, the flexibility of operation is less and the diesel yield is low when the invention is used to produce low-condensation point diesel.

U. S. Pat. Pub. No. 6858127 owned by Shell Company discloses a method for producing middle distillates. The method realizes hydrocracking of part of synthetic oil at least, then conducts hydrocracking of separated diesel fractions and tail oil and finally separates diesel fractions from the products. The condensation point of diesel fractions can drop to -28 °C. The density of diesel fractions can only reach 0.78 g/cm³. However, the diesel fractions still can't meet the density requirements of the new diesel standard.

CN103146426A discloses a method and corresponding system for converting Fischer-Tropsch synthesis products into naphtha, diesel and liquefied petroleum gas.

### SUMMARY OF THE INVENTION

In view of the above-described problems, it is one objective of the invention to provide a system and method for producing diesel fuel and jet fuel using Fischer-Tropsch synthetic oil. The method comprises two stages which are hydrofining and hydro-upgrading. Fischer-Tropsch synthetic oil mixes with hydrogen first and then enters a hydrofining reactor. The products of the hydrofining reactor enter a fractionating column to produce naphtha fractions as ethylene pyrolysis materials. Diesel fractions enter a hydroisomerization reactor and tail oil enters a hydrocracking reactor. The products of the hydro-isocracking and hydrocracking reactors mix and then enter the hydro-isocracking reactor to produce aviation kerosene and diesel products. The tail oil enters a cracking reactor. Compared to the conventional refining-cracking techniques, the system and method of the invention can produce quality diesel, aviation kerosene and hydro-treated wax oil, feature the simple technique, the stable process, the low investment in equipment, the low cost, the long operating period and the high yield of diesel and aviation kerosene. The produced diesel, aviation kerosene and hydro-treated wax oil can be used as fuel or quality blending composition.

To achieve the above objective, in accordance with one embodiment of the invention, there is provided a system for producing diesel fuel and jet fuel using Fischer-Tropsch synthetic oil, the system comprising a hydrofining reactor, a hot high-pressure separator, a first rectifying column, a hydrocracking reactor, a hydroisomerization reactor, a second rectifying column, a first mixing chamber, a second mixing chamber and a condensation fractionating column.

The hydrofining reactor comprises a raw material inlet and a hydro fining product outlet.

The hot high-pressure separator comprises a separated oil outlet and a hydrofining product inlet which is connected to the hydrofining product outlet.

The first rectifying column comprises a tail oil fraction outlet, a diesel fraction outlet and a separated oil inlet which is connected to the separated oil outlet.

The first mixing chamber comprises a circulating hydrogen inlet, a first mixture outlet and a tail oil fraction inlet which is connected to the tail oil fraction outlet.

The hydrocracking reactor comprises a hydrocracking product outlet and a first mixture inlet which is connected to the first mixture outlet.

The second mixture chamber comprises a renewal hydrogen inlet, a second mixture outlet and a diesel fraction inlet connected to the diesel fraction outlet.

The hydroisomerization reactor comprises a hydroisomerization product outlet and a second mixture inlet which is connected to the second mixture outlet.

The second rectifying column comprises an aviation kerosene outlet, a diesel outlet and a hydrogenation product mixture inlet which is connected to the hydrocracking product outlet and the hydroisomerization product outlet.

The condensation fractionating column comprises a gas inlet, a fourth gas outlet and a liquid outlet.

The hot high-pressure separator further comprises a first gas outlet. The first rectifying column further comprises a second gas outlet. The second rectifying column further comprises a third gas outlet.

The first gas outlet of the hot high-pressure separator, the second gas outlet of the first rectifying column and the third gas outlet of the second rectifying column each connect to the gas inlet of the condensation fractionating column. The fourth gas outlet of the condensation fractionating column is connected to the raw material inlet of the hydro fining reactor.

The second rectifying column further comprises a naphtha fraction outlet and a discharge pipe of the tail oil fraction and paraffin. The first rectifying column further comprises a naphtha fraction outlet. The discharge pipe of the tail oil fraction and paraffin is connected to the tail oil inlet of the first mixing chamber. The discharge pipe of the tail oil fraction and paraffin is connected to a paraffin outlet through a tee joint.

The pipe between the fourth gas outlet and the raw material inlet of the hydrofining reactor is connected to an oil mixture inlet pipe and a circulating hydrogen inlet pipe.

In another aspect, one embodiment of the invention also provides a method for producing diesel fuel and jet fuel using the system, the method comprising the following steps:
Step 1: transporting Fischer-Tropsch synthetic oil to the pipe through an oil mixture inlet pipe, introducing circulating hydrogen to the pipe through the circulating hydrogen inlet pipe, mixing and inputting the circulating hydrogen and the Fischer-Tropsch synthetic oil to the hydrofining reactor via the raw material inlet for a hydrofining reaction in the presence of a hydrofining catalyst to produce hydrofining products;
Step 2: allowing the hydrofining products to enter the hot high-pressure separator via the hydrofining product inlet to produce separated oil and cracking oil gas; discharging the separated oil via the separated oil outlet and introducing the separated oil to the first rectifying column via the separated oil inlet, discharging the cracking oil gas via the first gas outlet of the hot high-pressure separator;
Step 3: rectifying the separated oil in Step 2 to yield tail oil, diesel and naphtha fractions and cracking oil gas in the first rectifying column; discharging the tail oil fraction through the tail oil fraction outlet and allowing the tail oil fraction to enter the first mixing chamber through the tail oil fraction inlet; allowing the circulating hydrogen to enter the first mixing chamber through the circulating hydrogen inlet; mixing the tail oil fraction and the circulating hydrogen in the first mixing chamber and allowing a resulting mixture to enter the hydrocracking reactor through the first mixture outlet and the first mixture inlet; discharging the diesel fraction through the diesel fraction outlet and allowing the diesel fraction to enter the second mixing chamber through the diesel fraction inlet; introducing renewal hydrogen to enter the second mixing chamber through the renewal hydrogen inlet; mixing the diesel fraction and the renewal hydrogen in the second mixing chamber and allowing a resulting mixture to enter the hydroisomerization reactor through the second mixture outlet and the second mixture inlet; and discharging the cracking oil gas through the second gas outlet;
Step 4: hydrocracking the tail oil fraction and the circulating hydrogen in the hydrocracking reactor to produce hydrocracking products; hydroisomerizing the diesel fraction and the renewal hydrogen in the hydroisomerization reactor to produce hydroisomerization products;
Step 5: discharging the hydrocracking products through the hydrocracking product outlet; discharging the hydroisomerization products through the hydroisomerization product outlet; mixing the hydrocracking products and the hydroisomerization products and allowing a resulting mixture to enter the second rectifying column through the hydrogenation product mixture inlet; rectifying the mixture of the hydrocracking products and the hydroisomerization products to produce cracking oil gas, aviation kerosene, diesel, paraffin, the tail oil fraction and the naphtha fraction in the second rectifying column; guiding the aviation kerosene to an aviation kerosene tank through the aviation kerosene outlet, guiding the diesel to a diesel tank through the diesel outlet; guiding the naphtha fraction to a naphtha fraction tank through the naphtha fraction outlet;
   when aviation kerosene and diesel are the main products, guiding a mixture of the tail oil fraction and paraffin along the discharge pipe of the tail oil fraction and paraffin to enter the first mixing chamber via the tail oil fraction inlet to mix with the circulating hydrogen, and then enter the hydrocracking reactor; when paraffin is the main product, discharging the mixture of the tail oil fraction and paraffin through the paraffin outlet; and discharging the produced cracking oil gas through the third gas outlet of the second rectifying column; and
Step 6: mixing and introducing the discharged cracking oil gas in steps 2, 3 and 5 to the condensation fractionating column via the gas inlet, to yield gas and liquid; discharging the gas via the fourth gas outlet and then allowing the gas to enter the hydrofining reactor via the raw material inlet for cyclic utilization; and discharging the liquid via the liquid outlet and then converging the liquid with the naphtha fraction to yield ethylene pyrolysis materials.

The system and method of the invention ensure the hydroisomerization reactions of diesel and aviation kerosene in a moderate operating condition thus reducing cracking reactions to the greatest extent and achieving the highest yield of diesel and aviation kerosene. The wax oil fraction passes through the reactor with a catalyst having hydrocracking and isomerization functions for hydrocracking and isomerization reactions to produce diesel that meets the national standard IV for diesel and 3# aviation kerosene and the yield of diesel and aviation kerosene is high. In addition, the method can also produce paraffin, can adjust production plans according to production requirements, and overcomes the shortcomings of the tradition proposals introduced in the background art which includes short operating period, poor product quality, strict reaction conditions, less flexibility of operation and low yield of diesel. The diesel and aviation kerosene produced by the invention have a high yield. The cetane number of the diesel can exceed 60; the condensation point of the diesel is less than 0 °C; and the diesel can be used as a diesel blending composition or a diesel product. The smoke point of the aviation kerosene is greater than 25 mm; the freezing temperature of the aviation kerosene is less than -47 °C; and the aviation kerosene can be used as 3# jet fuel or a blending composition. The technical method has the advantages that the flow is simple, the reaction condition is moderate, the production plan is flexible, the operating cost is low and it is easy to apply the method in industrial production.

### BRIEF DESCRIPTION OF THE DRAWINGS

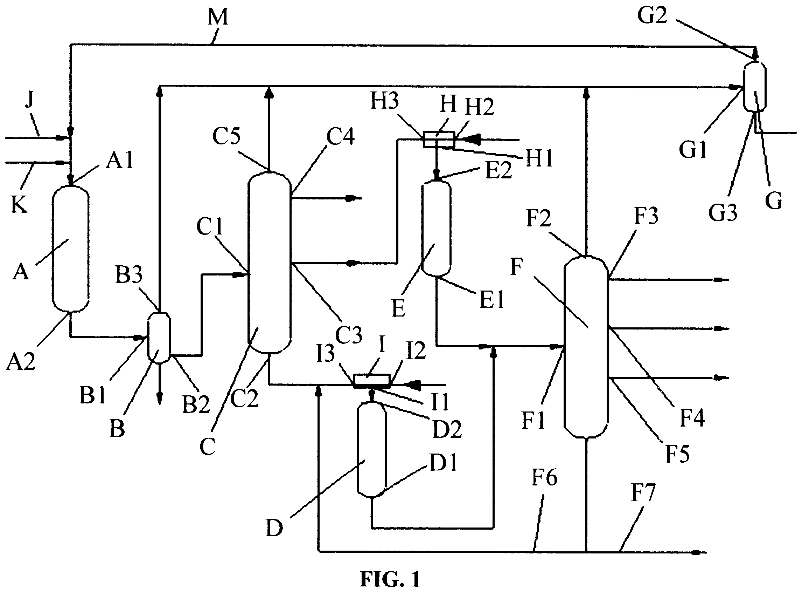

FIG 1 is a structural diagram of a system for producing diesel fuel and jet fuel using Fischer-Tropsch synthetic oil in accordance with one embodiment of the invention.

Legends: **A**. Hydrofining Reactor, **A1**. Raw Material Inlet, **A2**. Hydrofining Product Outlet, **B.** Hot High-pressure Separator, **B1**. Hydrofining Product Inlet, **B2**. Separated Oil Outlet, **B3**. First Gas Outlet, **C.** First Rectifying Column, **C1**. Separated Oil Inlet, **C2.** Tail Oil Fraction Outlet, **C3.** Diesel Fraction Outlet, **C4.** Naphtha Fraction Outlet, **C5.** Second Gas Outlet, **D.** Hydrocracking Reactor, **D1**. Hydrocracking Product Outlet, **D2.** First Mixture Inlet, **E.** Hydroisomerization Reactor, **E1**. Hydroisomerization Product Outlet, **E2.** Second Mixture Inlet, **F.** Second Rectifying Column, **F1**. Hydrogenation Product Mixture Inlet, **F2.** Third Gas Outlet, **F3.** Naphtha Fraction Outlet, **F4.** Aviation Kerosene Outlet, **F5.** Diesel Outlet, **F6.** Discharge Pipe of Tail Oil Fraction and Paraffin, **F7.** Paraffin Outlet, **G.** condensation Fractionating Column, **G1**. Gas Inlet, **G2.** Fourth Gas Outlet, **G3.** Liquid Outlet, **H.** Second Mixing Chamber, **H1.** Mixture Outlet, **H2.** Renewal hydrogen inlet, **H3.** Diesel Fraction Inlet, **I.** First Mixing Chamber, **I1**. First Mixture Outlet, **I2**. Circulating Hydrogen Inlet, **I3**. Tail Oil Fraction Inlet, **J**. Oil Mixture Inlet Pipe, **K.** Circulating Hydrogen Inlet Pipe.

### DETAILED DESCRIPTION OF THE EMBODIMENTS

The invention is further illustrated with the following figure and embodiments.

The system for producing diesel fuel and jet fuel using Fischer-Tropsch synthetic oil in FIG. 1 comprises a hydrofining reactor **A**, a hot high-pressure separator **B**, a first rectifying column **C**, a hydrocracking reactor **D**, a hydroisomerization reactor **E**, a second rectifying column **F**, a first mixing chamber **I**, a second mixing chamber **H**. and a condensation fractionating column.

The hydrofining reactor **A** comprises a raw material inlet **A1** and a hydrofining product outlet **A2.**

The hot high-pressure separator **B** comprises a separated oil outlet **B2** and a hydrofining product inlet **B1** which is connected to the hydrofining product outlet **A2**.

The first rectifying column **C** comprises a tail oil fraction outlet **C2**, a diesel fraction outlet **C3** and a separated oil inlet **C1** which is connected to the separated oil outlet **B2**.

The first mixing chamber **I** comprises a circulating hydrogen inlet **I2**, a first mixture outlet **I1** and a tail oil fraction inlet **I3** which is connected to the tail oil fraction outlet **C2**.

The hydrocracking reactor **D** comprises a hydrocracking product outlet **D1** and a first mixture inlet **D2** which is connected to the first mixture outlet **I1**.

The second mixture chamber **H** comprises a renewal hydrogen inlet **H2**, a second mixture outlet **H1** and a diesel fraction inlet **H3** connected to the diesel fraction outlet **C3**.

The hydroisomerization reactor **E** comprises a hydroisomerization product outlet **E1** and a second mixture inlet which connects **E2** with the second mixture outlet **H1**.

The second rectifying column **F** comprises an aviation kerosene outlet **F4**, a diesel outlet **F5** and a hydrogenation product mixture inlet **F1** which is connected to hydrocracking product outlet **D1** and the hydroisomerization product outlet **E1**.

The system comprises a condensation fractionating column **G**. The condensation fractionating column **G** comprises a gas inlet **G1**, a fourth gas outlet **G2** and a liquid outlet **G3**.

The hot high-pressure separator **B** further comprises a first gas outlet **B3.** The first rectifying column **C** further comprises a second gas outlet **C5.** The second rectifying column **F** further comprises a third gas outlet **F2.**

The first gas outlet **B3** of the hot high-pressure separator **B**, the second gas outlet **C5** of the first rectifying column **C** and the third gas outlet **F2** of the second rectifying column **F** each connect to the gas inlet **G1** of the condensation fractionating column **G**. The fourth gas outlet **G2** of the condensation fractionating column **G** is connected to the raw material inlet **A1** of the hydrofining reactor **A**.

The second rectifying column **F** further comprises a naphtha fraction outlet **F3** and a discharge pipe **F6** for cyclic utilization of the tail oil fraction and paraffin. The first rectifying column **C** further comprises a naphtha fraction outlet **C4**. The discharge pipe **F6** of the tail oil fraction and paraffin is connected to the tail oil inlet **I3** of the first mixing chamber **I**. The discharge pipe **F6** of the tail oil fraction and paraffin is connected to a paraffin outlet **F7** through a tee joint. (The design can improve the flexibility of production. When more aviation kerosene and diesel products need to produce, the mixture of tail oil fraction and paraffin produced in Step 5 (More than 95% of the mixture is paraffin) is discharged through the discharge pipe **F6** of the tail oil fraction and paraffin, then enters the first mixing chamber **I** through the tail oil fraction inlet **I3** to mix with the circulating hydrogen, and finally enters the hydrocracking reactor **D.** When paraffin products need to produce, the mixture of tail oil fraction and paraffin produced in Step 5 is discharged through the paraffin outlet **F7**).

The pipe **M** between the fourth gas outlet **G2** and the raw material inlet **A1** of the hydrofining reactor **A** is connected to an oil mixture inlet pipe **J** and a circulating hydrogen inlet pipe **K.**

The method for producing diesel fuel and jet fuel using the system comprises the following steps:
Step 1: The Fischer-Tropsch synthetic oil is transported to the pipe **M** through an oil mixture inlet pipe **J.** The circulating hydrogen is transported to the pipe **M** through the circulating hydrogen inlet pipe **K.** The circulating hydrogen and the Fischer-Tropsch synthetic oil fully mix and enter the hydrofining reactor **A** through the raw material inlet **A1** for the hydrofining reaction in the presence of a hydrofining catalyst to produce hydrofining products.
Step 2: The hydrofining products in Step 1 enter the hot high-pressure separator **B** through the hydrofining product inlet **B1** to produce separated oil and cracking oil gas. The separated oil is discharged through the separated oil outlet **B2** and then enters the first rectifying column **C** through the separated oil inlet **C1**. The cracking oil gas is discharged through the gas outlet **B3** of the hot high-pressure separator **B.**
Step 3: The separated oil in Step 2 is rectified into tail oil, diesel and naphtha fractions and cracking oil gas through the first rectifying column **C.** The tail oil fraction is discharged through the tail oil fraction outlet **C2** and enters the first mixing chamber **I** through the tail oil fraction inlet **I3**. The circulating hydrogen enters the first mixing chamber **I** through the circulating hydrogen inlet **I2.** The tail oil fraction and the circulating hydrogen mix in the first mixing chamber **I** and then enter the hydrocracking reactor **D** through the first mixture outlet **I1** and the first mixture inlet **D2.** The diesel fraction is discharged through the diesel fraction outlet **C3** and enters the second mixing chamber **H** through the diesel fraction inlet H3. Renewal hydrogen enters the second mixing chamber **H** through the renewal hydrogen inlet **H2.** The diesel fraction and the renewal hydrogen mix in the second mixing chamber **H** and then enter the hydroisomerization reactor E through the second mixture outlet **H1** and the second mixture inlet **E2.** The cracking oil gas is discharged through the second gas outlet **C5.**
Step 4: In the hydrocracking reactor **D,** the tail oil fraction and the circulating hydrogen produce hydrocracking products through the hydrocracking reaction. In the hydroisomerization reactor **E**, the diesel fraction and the renewal hydrogen produce hydroisomerization products through the hydroisomerization reaction.
Step 5: The hydrocracking product is discharged through the hydrocracking product outlet **D1**. The hydroisomerization product is discharged through the hydroisomerization product outlet **E1**. The discharged hydrocracking product and the discharged hydroisomerization product mix and then enter the second rectifying column **F** through the hydrogenation product mixture inlet **F1**. The mixture of the hydrocracking and hydroisomerization products produces cracking oil gas, aviation kerosene, diesel, paraffin, the tail oil fraction and the naphtha fraction through the second rectifying column **F** (separate corresponding fractions according to different temperatures). The aviation kerosene is transported to the aviation kerosene tank through the aviation kerosene outlet **F4.** The diesel is transported to the diesel tank through the diesel outlet. The naphtha fraction is transported to the naphtha fraction through the naphtha fraction outlet **F3.** The naphtha fraction can be used as ethylene pyrolysis materials
   When aviation kerosene and diesel are the main products, the produced mixture of the tail oil fraction and paraffin (Over 95% of the mixture is paraffin.) is discharged through the discharge pipe **F6** for cyclic utilization of the tail oil fraction and paraffin, enters the first mixing chamber I through the tail oil fraction inlet **I3** to mix with the circulating hydrogen, and then enters the hydrocracking reactor **D.** When paraffin is the main product, the produced mixture of the tail oil fraction and paraffin is discharged through the paraffin outlet **F7**, and enters the paraffin tank. The produced cracking oil gas in Step 5 is discharged through the third gas outlet **F2** of the second rectifying column **F.**
Step 6: The discharged cracking oil gas mixture in Steps 2, 3 and 5 enters the condensation fractionating column G through the gas inlet **G1**. Through condensation, gas and liquid are produced. The gas is discharged through the fourth gas outlet **G2** and then enters the hydrofining reactor **A** through the raw material inlet **A1** for cyclic utilization. The liquid is discharged through the liquid outlet **G3** and then converge with the naphtha fraction to serve as ethylene pyrolysis materials.

In the technical proposal, Fischer-Tropsch synthetic oil used in Step 1 comprises the low-temperature Fischer-Tropsch synthetic oil (ranging between 200 °C and 240 °C), or high-temperature Fischer-Tropsch synthetic oil (ranging between 250 °C and 350 °C), or part and/or full-range distillates of the oil mixture of the low-temperature Fischer-Tropsch synthetic oil and high-temperature Fischer-Tropsch synthetic oil.

The reaction conditions of the hydrofining reactor A in Step 1 of the technical proposal are as follows:

The reaction temperature ranges between 260 °C and 400 °C; the reaction pressure ranges between 2.0 MPa and 20.0 MPa; the liquid hourly space velocity ranges between 0.5 h⁻¹ and 3.0 h⁻¹; and the volume ratio of hydrogen to oil ranges between 500: 1 and 2000: 1.

The hydroisomerization reaction conditions in the hydroisomerization reactor **E** in Step 4 of the technical proposal are as follows:

The reaction temperature ranges between 280 °C and 400 °C; the reaction pressure ranges between 4.0 MPa and 15.0 MPa; the liquid hourly space velocity ranges between 0.5 h⁻¹ and 3.0 h⁻¹; and the volume ratio of hydrogen to oil ranges between 500: 1 and 2000: 1.

The hydrocracking reaction conditions of the hydrocracking reactor **D** in Step 4 of the technical proposal are as follows:

The reaction temperature ranges between 280 °C and 450 °C; the reaction pressure ranges between 5.0 MPa and 20.0 MPa; the liquid hourly space velocity ranges between 0.5 h⁻¹ and 3.0 h⁻¹; and the volume ratio of hydrogen to oil ranges between 500: 1 and 2000: 1.

The preferred hydrofining conditions of the hydrofining reactor **A** in Step 1 of the technical proposal are as follows:

The reaction temperature ranges between 280 °C and 390 °C; the reaction pressure ranges between 4.0 MPa and 15.0 MPa; the liquid hourly space velocity ranges between 0.5 h⁻¹ and 2.0 h⁻¹; and the volume ratio of hydrogen to oil ranges between 500: 1 and 1500: 1.

The preferred hydroisomerization reaction conditions of the hydroisomerization reactor **E** in Step 4 of the technical proposal are as follows:

The reaction temperature ranges between 280 °C and 370 °C; the reaction pressure ranges between 5.0 MPa and 12.0 MPa; the liquid hourly space velocity ranges between 0.5 h⁻¹ and 2.0 h⁻¹; and the volume ratio of hydrogen to oil ranges between 500: 1 and 1500: 1.

The preferred hydrocracking reaction conditions of the hydrocracking reactor **D** in Step 4 of the technical proposal are as follows:

The reaction temperature ranges between 320 °C and 400 °C; the reaction pressure ranges between 5.0 MPa and 15.0 MPa; the liquid hourly space velocity ranges between 0.5 h⁻¹ and 2.0 h⁻¹; and the volume ratio of hydrogen to oil ranges between 700: 1 and 1500: 1.

The invention is specifically illustrated by taking the high and low-temperature synthetic distillates as raw materials. Refer to Table 1 for the properties of high and low-temperature synthetic distillates.

According to the process shown in FIG. 1, after hydrofining, the Fischer-Tropsch synthetic product is fractionated to produce dry gas, naphtha, diesel and heavy oil. The dry gas goes through the gas-liquid separator **G** as the circulating hydrogen. The naphtha fraction serves as ethylene pyrolysis materials. The diesel fraction enters the hydroisomerization reactor **E.** the heavy oil enters the hydrocracking reactor **D.**

**Table 1 Properties of Full-range Low and High-temperature Synthetic Distillates**

| Items | Low temperature F-T synthetic oil | High temperature F-T synthetic oil |
|---|---|---|
| Density/g·cm⁻³ | 0.7961 | 0.8224 |
| Oxygen content/wt. % | 6.8 | 10.2 |
| Sulphur content/µg·g⁻¹ | <10 | <10 |
| Nitrogen content/µg·g⁻¹ | <10 | <10 |
| Olefin content/wt. % | 26 | 54 |
| Arene content/wt. % | 3 | 27 |
| Boiling range (ASTM-D1160) | | |
| IBP/50% | 52/378 | 69/153 |
| 90%/95% | 562/>650 | 331/352 |

### Example 1

The raw materials of the embodiment are low-temperature synthetic oil and the high-temperature synthetic oil. The ratio of the low-temperature synthetic oil to the high-temperature synthetic oil is 1: 1. The operating conditions of the hydrocracking reactor **D** are as follows: the reaction pressure is 5 MPa; the reaction temperature is 340 °C, the liquid hourly space velocity is 0.8 h⁻¹ and the volume ratio of hydrogen to oil is 700: 1. The operating conditions of the hydroisomerization reactor E are as follows: the reaction temperature is 330 °C, the reaction pressure is 5 MPa, the liquid hourly space velocity is 0.5 h⁻¹ and the volume ratio of hydrogen to oil is 700: 1. The hydrofining and hydrocracking sections serve as comparison tests. The operating conditions and product properties are listed in Tables **2** and **3.**

**Table 2 Operating Conditions in Example 1 and Comparison example**

| Items | Example 1 | Comparison example |
|---|---|---|
| Technical Process | Partial Circulation of the Tail Oil | Partial Circulation of the Tail Oil |
| Hydrofining/Hydrocracking/ Isomerism Catalyst | Hydrofining Agent 1/Hydrocracking Agent 1/Isomerism Agent 1 | Hydrofining Agent 1/Hydrocracking Agent 1 |
| Reaction Pressure/MPa | 5.0 | 6.0 |
| Refining/Modification/ Isomerism Liquid Hourly Space Velocity/ h⁻¹ | 1.0/0.8/0.5 | 0.8/1.0 |
| Refining/Modification/Isomerism Reaction Temperature/ °C | 320/350/330 | 320/360 |
| Volume Ratio of Hydrogen to Oil | 700: 1 | 700: 1 |

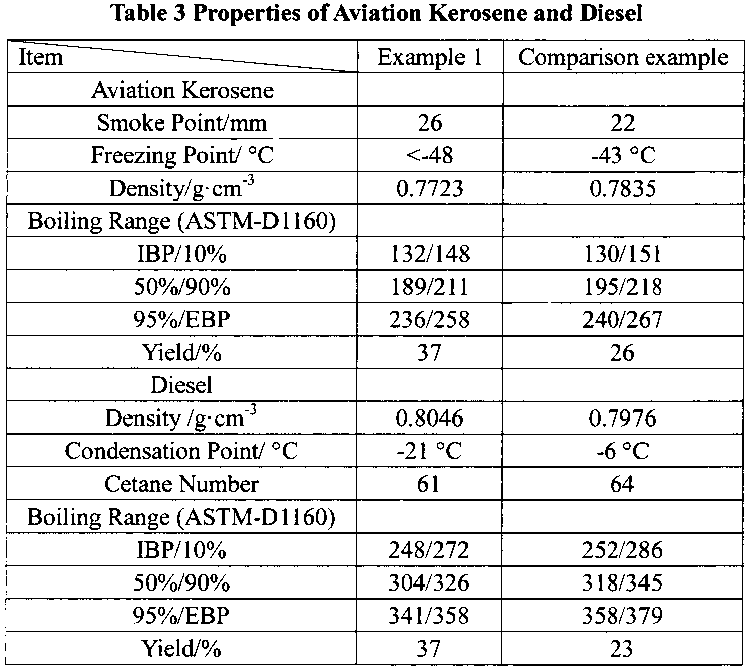

### Example 2

The raw materials of the embodiment are low-temperature synthetic oil and the high-temperature synthetic oil. The ratio of the low-temperature synthetic oil to the high-temperature synthetic oil is 2: 1. The operating conditions of the hydrocracking reactor **D** are as follows: the reaction pressure is 7 MPa; the reaction temperature is 375 °C, the liquid hourly space velocity is 1.3 h⁻¹ and the volume ratio of hydrogen to oil is 900: 1. The operating conditions of the hydroisomerization reactor E are as follows: the reaction temperature is 350 °C, the reaction pressure is 7 MPa, the liquid hourly space velocity is 1.0 h⁻¹ and the volume ratio of hydrogen to oil is 900: 1. The hydrofining and hydrocracking sections serve as comparison tests. The operating conditions and product properties are listed in Tables **4** and **5.**

**Table 4 Operating Conditions in Example 2 and Comparison example**

| Items | Example 2 | Comparison example |
|---|---|---|
| Technical Process | Full Circulation of the Tail Oil | Full Circulation of the Tail Oil |
| Hydrofining/Hydrocracking/Isomer ism Catalyst | Hydrofining Agent 2/Hydrocracking Agent 2/Isomerism Agent 2 | Hydrofining Agent 2/Hydrocracking Agent 2 |
| Reaction Pressure/MPa | 7.0 | 10.0 |
| Refining/Modification/Isomerism Liquid Hourly Space Velocity/ h⁻¹ | 2.0/1.3/1.0 | 1.5/2.0 |
| Refining/Modification/Isomerism Reaction Temperature/ °C | 350/370/350 | 350/370 |
| Volume Ratio of Hydrogen to Oil | 900: 1 | 900: 1 |

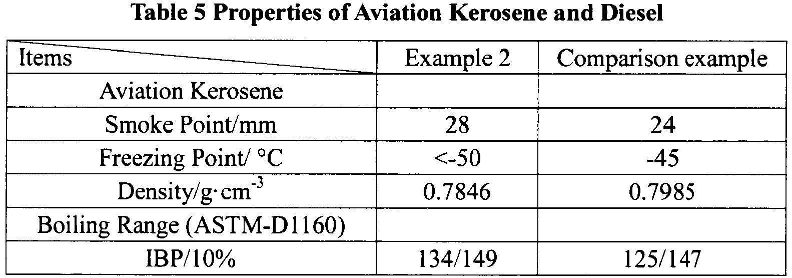

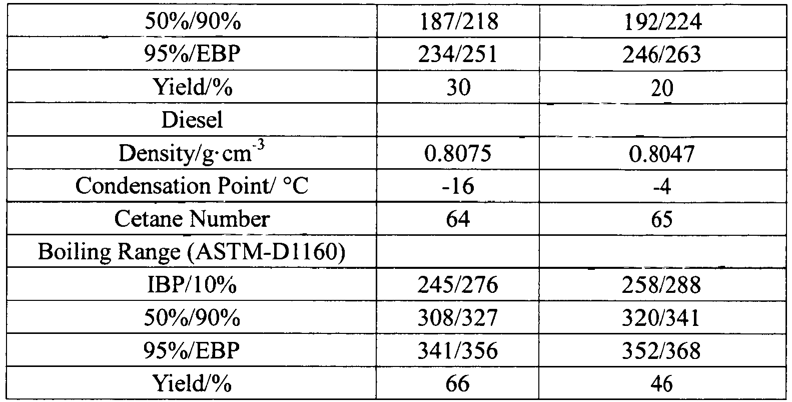

As shown in Examples **1** and **2**, compared to the current hydrofining-hydrocracking plans, the operating conditions of the technical plan are milder and the smoke point and freezing point of aviation kerosene can both meet the quality standard of 3# aviation kerosene, the product yield increases by over 10% and the cetane number is greater than 60. Although the cetane number is a little lower, the diesel yield increases by 20%.

The embodiments illustrate the advantages of the method of the invention more clearly and the level that the products of the invention can reach. According to the method of the invention, all compositions of Fischer-Tropsch synthetic oil are fully utilized. Compared to the ordinary technique for producing middle distillates by hydrocracking of Fischer-Tropsch synthetic wax, the method of the invention has the obvious advantages that the product quality is good and the yield is high.

Unless otherwise indicated, the numerical ranges involved in the invention include the end values. While particular embodiments of the invention have been shown and described, it will be obvious to those skilled in the art that changes and modifications may be made without departing from the invention in its broader aspects, and therefore, the aim in the appended claims is to cover all such changes and modifications as fall within the scope of the invention.

## Claims

1. A system for producing diesel fuel and jet fuel using Fischer-Tropsch synthetic oil, the system comprising a hydrofining reactor (A), a hot high-pressure separator (B), a first rectifying column (C), a hydrocracking reactor (D), a hydroisomerization reactor (E), a second rectifying column (F), a first mixing chamber (I) and a second mixing chamber (H); wherein
the hydrofining reactor (A) comprises a raw material inlet (A1) and a hydrofining product outlet (A2);
the hot high-pressure separator (B) comprises a separated oil outlet (B2) and a hydrofining product inlet (B1) which is connected to the hydrofining product outlet (A2);
the first rectifying column (C) comprises a tail oil fraction outlet (C2), a diesel fraction outlet (C3) and a separated oil inlet (C1) which is connected to the separated oil outlet (B2);
the first mixing chamber (I) comprises a circulating hydrogen inlet (I2), a first mixture outlet (I1) and a tail oil fraction inlet (I3) which is connected to the tail oil fraction outlet (C2);
the hydrocracking reactor (D) comprises a hydrocracking product outlet (D1) and a first mixture inlet (D2) which is connected to the first mixture outlet (I1);
the second mixture chamber (H) comprises a renewal hydrogen inlet (H2), a second mixture outlet (H1) and a diesel fraction inlet (H3) connected to the diesel fraction outlet (C3);
the hydroisomerization reactor (E) comprises a hydroisomerization product outlet (E1) and a second mixture inlet which connects (E2) with the second mixture outlet (H1); and
the second rectifying column (F) comprises an aviation kerosene outlet (F4), a diesel outlet (F5) and a hydrogenation product mixture inlet (F1) which is connected to hydrocracking product outlet (D1) and the hydroisomerization product outlet (E1), and wherein
the system further comprises a condensation fractionating column (G); the condensation fractionating column (G) comprises a gas inlet (G1), a fourth gas outlet (G2) and a liquid outlet (G3);
the hot high-pressure separator (B) further comprises a first gas outlet (B3); the first rectifying column (C) further comprises a second gas outlet (C5); the second rectifying column (F) further comprises a third gas outlet (F2);
the first gas outlet (B3) of the hot high-pressure separator (B), the second gas outlet (C5) of the first rectifying column (C) and the third gas outlet (F2) of the second rectifying column (F) each connect to the gas inlet (G1) of the condensation fractionating column (G); the fourth gas outlet (G2) of the condensation fractionating column (G) is connected to the raw material inlet (A1) of the hydrofining reactor (A);
the second rectifying column (F) further comprises a naphtha fraction outlet (F3) and a discharge pipe (F6) for cyclic utilization of the tail oil fraction and paraffin; the first rectifying column (C) further comprises a naphtha fraction outlet (C4); the discharge pipe (F6) of the tail oil fraction and paraffin is connected to the tail oil inlet (I3) of the first mixing chamber (I); the discharge pipe (F6) of the tail oil fraction and paraffin is connected to a paraffin outlet (F7) through a tee joint; and
a pipe M between the fourth gas outlet (G2) and the raw material inlet (A1) of the hydrofining reactor (A) is connected to an oil mixture inlet pipe (J) and a circulating hydrogen inlet pipe (K).

2. A method for producing diesel fuel and jet fuel using the system of claim 1, the method comprising:
1) transporting Fischer-Tropsch synthetic oil to the pipe (M) through the oil mixture inlet pipe (J), introducing circulating hydrogen to the pipe (M) through the circulating hydrogen inlet pipe (K), mixing and inputting the circulating hydrogen and the Fischer-Tropsch synthetic oil to the hydrofining reactor (A) via the raw material inlet (A1) for a hydrofining reaction in the presence of a hydrofining catalyst to produce hydrofining products;
2) allowing the hydrofining products to enter the hot high-pressure separator (B) via the hydrofining product inlet (B1) to produce separated oil and cracking oil gas; discharging the separated oil via the separated oil outlet (B2) and introducing the separated oil to the first rectifying column (C) via the separated oil inlet (C1), discharging the cracking oil gas via the first gas outlet (B3) of the hot high-pressure separator (B);
3) rectifying the separated oil in 2) to yield tail oil, diesel and naphtha fractions and cracking oil gas in the first rectifying column (C); discharging the tail oil fraction through the tail oil fraction outlet (C2) and allowing the tail oil fraction to enter the first mixing chamber (I) through the tail oil fraction inlet(I3); allowing the circulating hydrogen to enter the first mixing chamber (I) through the circulating hydrogen inlet (12); mixing the tail oil fraction and the circulating hydrogen in the first mixing chamber (I) and allowing a resulting mixture to enter the hydrocracking reactor (D) through the first mixture outlet (I1) and the first mixture inlet (D2); discharging the diesel fraction through the diesel fraction outlet (C3) and allowing the diesel fraction to enter the second mixing chamber (H) through the diesel fraction inlet (H3); introducing renewal hydrogen to enter the second mixing chamber (H) through the renewal hydrogen inlet (H2); mixing the diesel fraction and the renewal hydrogen in the second mixing chamber (H) and allowing a resulting mixture to enter the hydroisomerization reactor (E) through the second mixture outlet (H1) and the second mixture inlet (E2); and discharging the cracking oil gas through the second gas outlet (C5);
4) hydrocracking the tail oil fraction and the circulating hydrogen in the hydrocracking reactor (D) to produce hydrocracking products; hydroisomerizing the diesel fraction and the renewal hydrogen in the hydroisomerization reactor (E) to produce hydroisomerization products;
5) discharging the hydrocracking products through the hydrocracking product outlet (D1); discharging the hydroisomerization products through the hydroisomerization product outlet (E1); mixing the hydrocracking products and the hydroisomerization products and allowing a resulting mixture to enter the second rectifying column (F) through the hydrogenation product mixture inlet (F1); rectifying the mixture of the hydrocracking products and the hydroisomerization products to produce cracking oil gas, aviation kerosene, diesel, paraffin, the tail oil fraction and the naphtha fraction in the second rectifying column (F); guiding the aviation kerosene to an aviation kerosene tank through the aviation kerosene outlet (F4), guiding the diesel to a diesel tank through the diesel outlet (F5); guiding the naphtha fraction to a naphtha fraction tank through the naphtha fraction outlet (F3);
when aviation kerosene and diesel are the main products, guiding a mixture of the tail oil fraction and paraffin along the discharge pipe (F6) of the tail oil fraction and paraffin to enter the first mixing chamber (I) via the tail oil fraction inlet (I3) to mix with the circulating hydrogen, and then enter the hydrocracking reactor (D); when paraffin is the main product, discharging the mixture of the tail oil fraction and paraffin through the paraffin outlet (F7); and discharging the produced cracking oil gas through the third gas outlet (F2) of the second rectifying column (F); and
6) mixing and introducing the discharged cracking oil gas in 2), 3) and 5) to the condensation fractionating column (G) via the gas inlet (G1), to yield gas and liquid; discharging the gas via the fourth gas outlet (G2) and then allowing the gas to enter the hydro fining reactor (A) via the raw material inlet (A1) for cyclic utilization; and discharging the liquid via the liquid outlet (G3) and then converging the liquid with the naphtha fraction to yield ethylene pyrolysis materials.

3. The method of claim 2, **characterized in that** the Fischer-Tropsch synthetic oil used in 1) comprises the low-temperature Fischer-Tropsch synthetic oil, or high-temperature Fischer-Tropsch synthetic oil, or part and/or full-range distillates of the oil mixture of the low-temperature Fischer-Tropsch synthetic oil and high-temperature Fischer-Tropsch synthetic oil.

4. The method of claim 2, **characterized in that** in 1), reaction conditions in the hydro fining reactor (A) are as follows: a reaction temperature ranges between 260 °C and 400 °C; a reaction pressure ranges between 2.0 MPa and 20.0 MPa; a liquid hourly space velocity ranges between 0.5 h⁻¹ and 3.0 h⁻¹; and a volume ratio of hydrogen to oil ranges between 500: 1 and 2000: 1.

5. The method of claim 2, **characterized in that** in 4), reaction conditions in the hydroisomerization reactor (E) are as follows: a reaction temperature ranges between 280 °C and 400 °C; a reaction pressure ranges between 4.0 MPa and 15.0 MPa; a liquid hourly space velocity ranges between 0.5 h⁻¹ and 3.0 h⁻¹; and a volume ratio of hydrogen to oil ranges between 500: 1 and 2000: 1.

6. The method of claim 2, **characterized in that** in 4), reaction conditions in the hydrocracking reactor (D) are as follows: a reaction temperature ranges between 280 °C and 450 °C; a reaction pressure ranges between 5.0 MPa and 20.0 MPa; a liquid hourly space velocity ranges between 0.5 h⁻¹ and 3.0 h⁻¹; and a volume ratio of hydrogen to oil ranges between 500: 1 and 2000: 1.

7. The method of claim 4, **characterized in that** in 1), the reaction conditions in the hydrofining reactor (A) are as follows: the reaction temperature ranges between 280 °C and 390 °C; the reaction pressure ranges between 4.0 MPa and 15.0 MPa; the liquid hourly space velocity ranges between 0.5 h⁻¹ and 2.0 h⁻¹; and the volume ratio of hydrogen to oil ranges between 500: 1 and 1500: 1.

8. The method of claim 5, **characterized in that** in 4), the reaction conditions in the hydroisomerization reactor (E) are as follows: the reaction temperature ranges between 280 °C and 370 °C; the reaction pressure ranges between 5.0 MPa and 12.0 MPa; the liquid hourly space velocity ranges between 0.5 h⁻¹ and 2.0 h⁻¹; and the volume ratio of hydrogen to oil ranges between 500: 1 and 1500: 1.

9. The method of claim 6, **characterized in that** the in 4), reaction conditions in the hydrocracking reactor (D) are as follows: the reaction temperature ranges between 320 °C and 400 °C; the reaction pressure ranges between 5.0 MPa and 15.0 MPa; the liquid hourly space velocity ranges between 0.5 h⁻¹ and 2.0 h⁻¹; and the volume ratio of hydrogen to oil ranges between 700: 1 and 1500: 1.

## Patentansprüche

1. System zur Herstellung von Dieselkraftstoff und Düsentreibstoff unter Verwendung von synthetischem Fischer-Tropsch-Öl, wobei das System einen Wasserstoffraffinierungs-Reaktor (A), einen heißen Hochdruckabscheider (B), eine erste Rektifikationskolonne (C), einen Hydrocrack-Reaktor (D), einen Hydroisomerisierungs-Reaktor (E), eine zweite Rektifikationskolonne (F), eine erste Mischkammer (I) und eine zweite Mischkammer (H) umfasst; wobei
der Wasserstoffraffinierungs-Reaktor (A) einen Ausgangsmaterial-Einlass (A1) und einen Wasserstoffraffinierungsprodukt-Auslass (A2) umfasst;
der heiße Hochdruckabscheider (B) einen getrennten Ölauslass (B2) und einen Wasserstoffraffinierungsprodukt-Einlass (B1) umfasst, der mit dem Wasserstoffraffinierungsprodukt-Auslass (A2) verbunden ist;
die erste Rektifikationskolonne (C) einen Nachlaufölfraktions-Auslass (C2), einen Dieselfraktions-Auslass (C3) und einen getrennten Öleinlass (C1) umfasst, der mit dem getrennten Ölauslass (B2) verbunden ist;
die erste Mischkammer (I) einen zirkulierenden Wasserstoffeinlass (I2), einen ersten Gemischauslass (I1) und einen Nachlaufölfraktions-Einlass (I3) umfasst, der mit dem Nachlaufölfraktions-Auslass (C2) verbunden ist;
der Hydrocrack-Reaktor (D) einen Hydrocrackprodukt-Auslass (D1) und einen ersten Gemisch-Einlass (D2) umfasst, der mit dem ersten Gemisch-Auslass (I1) verbunden ist;
die zweite Gemischkammer (H) einen Erneuerungswasserstoff-Einlass (H2), einen zweiten Gemisch-Auslass (H1) und einen mit dem Dieselfraktions-Auslass (C3) verbundenen Dieselfraktions-Einlass (H3) umfasst;
der Hydroisomerisierungs-Reaktor (E) einen Hydroisomerisierungsprodukt-Auslass (E1) und einen zweiten Gemisch-Einlass umfasst, der (E2) mit dem zweiten Gemisch-Auslass (H1) verbindet; und
die zweite Rektifikationskolonne (F) einen Flugzeugkerosin-Auslass (F4), einen Diesel-Auslass (F5) und einen Hydrierungsproduktgemisch-Einlass (F1) umfasst, der mit dem Hydrocrackprodukt-Auslass (D1) und dem Hydroisomerisierungsprodukt-Auslass (E1) verbunden ist, und wobei
das System ferner eine Kondensationsfraktionierkolonne (G) umfasst; wobei die Kondensationsfraktionierkolonne (G) einen Gaseinlass (G1), einen vierten Gasauslass (G2) und einen Flüssigkeits-Auslass (G3) umfasst;
der heiße Hochdruckabscheider (B) ferner einen ersten Gasauslass (B3) umfasst; die erste Rektifikationskolonne (C) ferner einen zweiten Gasauslass (C5) umfasst; die zweite Rektifikationskolonne (F) ferner einen dritten Gasauslass (F2) umfasst;
der erste Gasauslass (B3) des heißen Hochdruckabscheiders (B), der zweite Gasauslass (C5) der ersten Rektifikationskolonne (C) und der dritte Gasauslass (F2) der zweiten Rektifikationskolonne (F) jeweils mit dem Gaseinlass (G1) der Kondensationsfraktionierkolonne (G) verbunden sind; der vierte Gasauslass (G2) der Kondensationsfraktionierkolonne (G) mit dem Ausgangsmaterial-Einlass (A1) des Wasserstoffraffinierungs-Reaktors (A) verbunden ist;
die zweite Rektifikationskolonne (F) ferner einen Naphthafraktions-Auslass (F3) und ein Ableitungsrohr (F6) zur zyklischen Nutzung der Nachlaufölfraktion und des Paraffins umfasst; die erste Rektifikationskolonne (C) ferner einen Naphthafraktions-Auslass (C4) umfasst; wobei das Ableitungsrohr (F6) der Nachlaufölfraktion und des Paraffins mit dem Nachlauföl-Einlass (I3) der ersten Mischkammer (I) verbunden ist; wobei das Ableitungsrohr (F6) der Nachlaufölfraktion und des Paraffins mit einem Paraffin-Auslass (F7) über eine T-Stück-Verbindung verbunden ist; und
eine Leitung M zwischen dem vierten Gasauslass (G2) und dem Ausgangsmaterial-Einlass (A1) des Wasserstoffraffinierungs-Reaktors (A) mit einer Ölgemisch-Einlassleitung (J) und einer zirkulierenden Wasserstoff-Einlassleitung (K) verbunden ist.

2. Verfahren zur Herstellung von Dieselkraftstoff und Düsentreibstoff unter Verwendung des Systems nach Anspruch 1, wobei das Verfahren umfasst:
1) Transportieren von synthetischem Fischer-Tropsch-Öl zur Leitung (M) durch die Ölgemisch-Einlassleitung (J), Einleiten von zirkulierendem Wasserstoff in die Leitung (M) durch die zirkulierende Wasserstoff-Einlassleitung (K), Mischen und Einbringen des zirkulierenden Wasserstoffs und des synthetischen Fischer-Tropsch-Öls in den Wasserstoffraffinierungs-Reaktor (A) über den Ausgangsmaterial-Einlass (A1) für eine Wasserstoffraffinierungsreaktion in Gegenwart eines Wasserstoffraffinierungs-Katalysators zur Herstellung von Wasserstoffraffinierungsprodukten;
2) Ermöglichen, dass die Wasserstoffraffinierungsprodukte über den Wasserstoffraffinierungsprodukt-Einlass (B1) in den heißen Hochdruckabscheider (B) eintreten, um abgetrenntes Öl und Crackölgas zu erzeugen; Ableiten des abgetrennten Öls über den abgetrennten Ölauslass (B2) und Einleiten des abgetrennten Öls in die erste Rektifikationskolonne (C) über den abgetrennten Öleinlass (C1), Ableiten des Crackölgases über den ersten Gasauslass (B3) des heißen Hochdruckabscheiders (B);
3) Rektifizieren des abgetrennten Öls in 2), um Nachlauföl-, Diesel- und Naphtha-Fraktionen und Crackölgas in der ersten Rektifikationskolonne (C) zu erhalten; Ableiten der Nachlaufölfraktion durch den Nachlaufölfraktions-Auslass (C2) und Ermöglichen, dass die Nachlaufölfraktion in die erste Mischkammer (I) durch den Nachlaufölfraktions-Einlass (I3) eintritt; Ermöglichen, dass der zirkulierende Wasserstoff durch den zirkulierenden Wasserstoff-Einlass (I2) in die erste Mischkammer (I) eintritt; Mischen der Nachlaufölfraktion und des zirkulierenden Wasserstoffs in der ersten Mischkammer (I) und Ermöglichen, dass ein resultierendes Gemisch durch den ersten Gemisch-Auslass (I1) und den ersten Gemisch-Einlass (D2) in den Hydrocrack-Reaktor (D) eintritt; Ableiten der Dieselfraktion durch den Dieselfraktions-Auslass (C3) und Ermöglichen, dass die Dieselfraktion durch den Dieselfraktions-Einlass (H3) in die zweite Mischkammer (H) eintritt; Einleiten von Erneuerungswasserstoff, um durch den Erneuerungswasserstoff-Einlass (H2) in die zweite Mischkammer (H) einzutreten; Mischen der Dieselfraktion und des Erneuerungswasserstoffs in der zweiten Mischkammer (H) und Ermöglichen, dass ein resultierendes Gemisch durch den zweiten Gemisch-Auslass (H1) und den zweiten Gemisch-Einlass (E2) in den Hydroisomerisierungs-Reaktor (E) eintritt; und Ableiten des Crackölgases durch den zweiten Gasauslass (C5);
4) Hydrocracken der Nachlaufölfraktion und des zirkulierenden Wasserstoffs im Hydrocrack-Reaktor (D) zur Herstellung von Hydrocrackprodukten; Hydroisomerisieren der Dieselfraktion und des Erneuerungswasserstoffs in dem Hydroisomerisierungs-Reaktor (E) zur Herstellung von Hydroisomerisierungsprodukten;
5) Ableiten der Hydrocrackprodukte durch den Hydrocrackprodukt-Auslass (D1); Ableiten der Hydroisomerisierungsprodukte durch den Hydroisomerisierungsprodukt-Auslass (E1); Mischen der Hydrocrackprodukte und der Hydroisomerisierungsprodukte und Ermöglichen, dass ein resultierendes Gemisch durch den Hydrierungsproduktgemisch-Einlass (F1) in die zweite Rektifikationskolonne (F) eintritt; Rektifizieren des Gemischs aus den Hydrocrackprodukten und den Hydroisomerisierungsprodukten zur Herstellung von Crackölgas, Flugzeugkerosin, Diesel, Paraffin, der Nachlaufölfraktion und der Naphtha-Fraktion in der zweiten Rektifikationskolonne (F); Leiten des Flugzeugkerosins durch den Flugzeugkerosin-Auslass (F4) zu einem Flugzeugkerosintank, Leiten des Diesels durch den Dieselauslass (F5) zu einem Dieseltank; Leiten der Naphthafraktion durch den Naphthafraktions-Auslass (F3) zu einem Naphthafraktions-Tank;
wenn Flugzeugkerosin und Diesel die Hauptprodukte sind, Leiten eines Gemischs aus der Nachlaufölfraktion und Paraffin entlang des Ableitungsrohrs (F6) der Nachlaufölfraktion und des Paraffins über den Nachlauföleinlass (I3), um in die erste Mischkammer (I) einzutreten, um sich mit dem zirkulierenden Wasserstoff zu vermischen, und danach in den Hydrocrack-Reaktor (D) einzutreten; wenn Paraffin das Hauptprodukt ist,
Ableiten des Gemischs aus Nachlaufölfraktion und Paraffin durch den Paraffin-Auslass (F7); und Ableiten des erzeugten Crackölgases durch den dritten Gasauslass (F2) der zweiten Rektifikationskolonne (F); und
6) Mischen und Einleiten des abgeleiteten Crackölgases in 2), 3) und 5) in die Kondensationsfraktionierkolonne (G) über den Gaseinlass (G1), um Gas und Flüssigkeit zu gewinnen; Ableiten des Gases über den vierten Gasauslass (G2) und danach Ermöglichen, dass das Gas über den Ausgangsmaterial-Einlass (A1) in den Wasserstoffraffinierungs-Reaktor (A) zur zyklischen Nutzung eintritt; und Ableiten der Flüssigkeit über den Flüssigkeits-Auslass (G3) und danach Konvergieren der Flüssigkeit mit der Naphthafraktion, um Ethylenpyrolysematerialien zu erhalten.

3. Verfahren nach Anspruch 2, **dadurch gekennzeichnet, dass** das in 1) verwendete synthetische Fischer-Tropsch-Öl das synthetische Niedertemperatur-Fischer-Tropsch-Öl oder das synthetische Hochtemperatur-Fischer-Tropsch-Öl oder Teilbereichs- und/oder Vollbereichs-Destillate des Ölgemischs aus dem synthetischen Niedertemperatur-Fischer-Tropsch-Öl und dem synthetischen Hochtemperatur-Fischer-Tropsch-Öl umfasst.

4. Verfahren nach Anspruch 2, **dadurch gekennzeichnet, dass** in 1) die Reaktionsbedingungen in dem Wasserstoffraffinierungs-Reaktor (A) wie folgt sind: eine Reaktionstemperatur, die in dem Bereich zwischen 260 °C und 400 °C liegt; ein Reaktionsdruck, der in dem Bereich zwischen 2,0 MPa und 20,0 MPa liegt; eine Flüssigkeitsstundenraumgeschwindigkeit, die in dem Bereich zwischen 0,5 h⁻¹ und 3,0 h⁻¹ liegt; und ein Volumenverhältnis von Wasserstoff zu Öl, das in dem Bereich zwischen 500: 1 und 2.000: 1 liegt.

5. Verfahren nach Anspruch 2, **dadurch gekennzeichnet, dass** in 4) die Reaktionsbedingungen in dem Hydroisomerisierungs-Reaktor (E) wie folgt sind: eine Reaktionstemperatur, die in dem Bereich zwischen 280 °C und 400 °C liegt; ein Reaktionsdruck, der in dem Bereich zwischen 4,0 MPa und 15,0 MPa liegt; eine Flüssigkeitsstundenraumgeschwindigkeit, die in dem Bereich zwischen 0,5 h⁻¹ und 3,0 h⁻¹ liegt; und ein Volumenverhältnis von Wasserstoff zu Öl, das in dem Bereich zwischen 500: 1 und 2.000: 1 liegt.

6. Verfahren nach Anspruch 2, **dadurch gekennzeichnet, dass** in 4) die Reaktionsbedingungen in dem Hydrocrack-Reaktor (D) wie folgt sind: eine Reaktionstemperatur, die in dem Bereich zwischen 280 °C und 450 °C liegt; ein Reaktionsdruck, der in dem Bereich zwischen 5,0 MPa und 20,0 MPa liegt; eine Flüssigkeitsstundenraumgeschwindigkeit, die in dem Bereich zwischen 0,5 h⁻¹ und 3,0 h⁻¹ liegt; und ein Volumenverhältnis von Wasserstoff zu Öl, das in dem Bereich zwischen 500: 1 und 2.000: 1 liegt.

7. Verfahren nach Anspruch 4, **dadurch gekennzeichnet, dass** in 1) die Reaktionsbedingungen in dem Wasserstoffraffinierungs-Reaktor (A) wie folgt sind: die Reaktionstemperatur in dem Bereich zwischen 280 °C und 390 °C liegt; der Reaktionsdruck in dem Bereich zwischen 4,0 MPa und 15,0 MPa liegt; die Flüssigkeitsstundenraumgeschwindigkeit in dem Bereich zwischen 0,5 h⁻¹ und 2,0 h⁻¹ liegt; und das Volumenverhältnis von Wasserstoff zu Öl in dem Bereich zwischen 500: 1 und 1.500: 1 liegt.

8. Verfahren nach Anspruch 5, **dadurch gekennzeichnet, dass** in 4) die Reaktionsbedingungen in dem Hydroisomerisierungs-Reaktor (E) wie folgt sind: die Reaktionstemperatur in dem Bereich zwischen 280 °C und 370 °C liegt; der Reaktionsdruck in dem Bereich zwischen 5,0 MPa und 12,0 MPa liegt; die Flüssigkeitsstundenraumgeschwindigkeit in dem Bereich zwischen 0,5 h⁻¹ und 2,0 h⁻¹ liegt; und das Volumenverhältnis von Wasserstoff zu Öl in dem Bereich zwischen 500: 1 und 1.500: 1 liegt.

9. Verfahren nach Anspruch 6, **dadurch gekennzeichnet, dass** in 4) die Reaktionsbedingungen in dem Hydrocrack-Reaktor (D) wie folgt sind: die Reaktionstemperatur in dem Bereich zwischen 320 °C und 400 °C liegt; der Reaktionsdruck in dem Bereich zwischen 5,0 MPa und 15,0 MPa liegt; die Flüssigkeitsstundenraumgeschwindigkeit in dem Bereich zwischen 0,5 h⁻¹ und 2,0 h⁻¹ liegt; und das Volumenverhältnis von Wasserstoff zu Öl in dem Bereich zwischen 700: 1 und 1.500: 1 liegt.

## Revendications

1. Système destiné à produire du carburant diesel et du kérosène à l'aide d'huile de synthèse Fischer-Tropsch, le système comprenant un réacteur d'hydroraffinage (A), un séparateur haute pression chaud (B), une première colonne de rectification (C), un réacteur d'hydrocraquage (D), un réacteur d'hydroisomérisation (E), une deuxième colonne de rectification (F), une première chambre de mélange (I) et une deuxième chambre de mélange (H) ; dans lequel
le réacteur d'hydroraffinage (A) comprend une entrée de matière première (A1) et une sortie de produit d'hydroraffinage (A2) ;
le séparateur haute pression chaud (B) comprend une sortie d'huile séparée (B2) et une entrée de produit d'hydroraffinage (B1) reliée à la sortie de produit d'hydroraffinage (A2) ;
la première colonne de rectification (C) comprend une sortie de fraction d'huile de queue (C2), une sortie de fraction de diesel (C3) et une entrée d'huile séparée (C1) reliée à la sortie d'huile séparée (B2) ;
la première chambre de mélange (I) comprend une entrée d'hydrogène circulant (I2), une première sortie de mélange (I1) et une entrée de fraction d'huile de queue (I3) reliée à la sortie de fraction d'huile de queue (C2) ;
le réacteur d'hydrocraquage (D) comprend une sortie de produit d'hydrocraquage (D1) et une première entrée de mélange (D2) reliée à la première sortie de mélange (I1);
la deuxième chambre de mélange (H) comprend une entrée d'hydrogène de renouvellement (H2), une deuxième sortie de mélange (H1) et une entrée de fraction de diesel (H3) reliée à la sortie de fraction de diesel (C3) ;
le réacteur d'hydroisomérisation (E) comprend une sortie de produit d'hydroisomérisation (E1) et une deuxième entrée de mélange reliant (E2) à la deuxième sortie de mélange (H1) ; et
la deuxième colonne de rectification (F) comprend une sortie de kérosène d'aviation (F4), une sortie de diesel (F5) et une entrée de mélange de produit d'hydrogénation (F1) reliée à la sortie de produit d'hydrocraquage (D1) et à la sortie de produit d'hydroisomérisation (E1), et dans lequel
le système comprend en outre une colonne de fractionnement de condensation (G) ; la colonne de fractionnement de condensation (G) comprend une entrée de gaz (G1), une quatrième sortie de gaz (G2) et une sortie de liquide (G3) ;
le séparateur haute pression chaud (B) comprend en outre une première sortie de gaz (B3) ; la première colonne de rectification (C) comprend en outre une deuxième sortie de gaz (C5) ; la deuxième colonne de rectification (F) comprend en outre une troisième sortie de gaz (F2) ;
la première sortie de gaz (B3) du séparateur haute pression chaud (B), la deuxième sortie de gaz (C5) de la première colonne de rectification (C) et la troisième sortie de gaz (F2) de la deuxième colonne de rectification (F) sont reliées respectivement à l'entrée de gaz (G1) de la colonne de fractionnement de condensation (G) ; la quatrième sortie de gaz (G2) de la colonne de fractionnement de condensation (G) est reliée à l'entrée de matière première (A1) du réacteur d'hydroraffinage (A) ;
la deuxième colonne de rectification (F) comprend en outre une sortie de fraction de naphta (F3) et un tuyau de décharge (F6) pour l'utilisation cyclique de la fraction d'huile de queue et de la paraffine ; la première colonne de rectification (C) comprend en outre une sortie de fraction de naphta (C4) ; le tuyau de décharge (F6) de la fraction d'huile de queue et de la paraffine est relié à l'entrée d'huile de queue (I3) de la première chambre de mélange (I) ; le tuyau de décharge (F6) de la fraction d'huile de queue et de la paraffine est relié à une sortie de paraffine (F7) par le biais d'un raccord en T ; et
un tuyau M entre la quatrième sortie de gaz (G2) et l'entrée de matière première (A1) du réacteur d'hydroraffinage (A) est relié à un tuyau d'entrée de mélange d'huile (J) et à un tuyau d'entrée d'hydrogène circulant (K).

2. Procédé pour la production de carburant diesel et de kérosène à l'aide du système selon la revendication 1, le procédé comprenant :
1) le transport d'huile de synthèse Fischer-Tropsch vers le tuyau (M) à travers le tuyau d'entrée de mélange d'huile (J), l'introduction d'hydrogène circulant dans le tuyau (M) à travers le tuyau d'entrée d'hydrogène circulant (K), le mélange et l'introduction de l'hydrogène circulant et de l'huile de synthèse Fischer-Tropsch dans le réacteur d'hydroraffinage (A) par le biais de l'entrée de matière première (A1) pour une réaction d'hydroraffinage en présence d'un catalyseur d'hydroraffinage pour produire des produits d'hydroraffinage ;
2) l'entrée des produits d'hydroraffinage dans le séparateur haute pression chaud (B) par le biais de l'entrée de produit d'hydroraffinage (B1) pour produire de l'huile séparée et du gaz d'huile de craquage ; la décharge de l'huile séparée par la sortie d'huile séparée (B2) et l'introduction de l'huile séparée dans la première colonne de rectification (C) par le biais de l'entrée d'huile séparée (C1), la décharge du gaz d'huile de craquage par première sortie de gaz (B3) du séparateur haute pression chaud (B) ;
3) la rectification de l'huile séparée à l'étape 2) pour obtenir des fractions d'huile de queue, de diesel et de naphta et du gaz d'huile de craquage dans la première colonne de rectification (C) ; la décharge de la fraction d'huile de queue à travers la sortie de fraction d'huile de queue (C2) et l'entrée de la fraction d'huile de queue dans la première chambre de mélange (I) à travers l'entrée de fraction d'huile de queue (I3) ; l'entrée de l'hydrogène circulant dans la première chambre de mélange (I) à travers l'entrée d'hydrogène circulant (I2) ; le mélange de la fraction d'huile de queue et de l'hydrogène circulant dans la première chambre de mélange (I) et l'entrée d'un mélange résultant dans le réacteur d'hydrocraquage (D) à travers la première sortie de mélange (I1) et la première entrée de mélange (D2); la décharge de la fraction de diesel à travers la sortie de fraction de diesel (C3) et l'entrée de la fraction de diesel dans la deuxième chambre de mélange (H) à travers l'entrée de fraction de diesel (H3); l'introduction d'hydrogène de renouvellement dans la deuxième chambre de mélange (H) à travers l'entrée d'hydrogène de renouvellement (H2) ; le mélange de la fraction de diesel et de l'hydrogène de renouvellement dans la deuxième chambre de mélange (H) et l'entrée du mélange résultant dans le réacteur d'hydroisomérisation (E) à travers la deuxième sortie de mélange (H1) et de la deuxième entrée de mélange (E2) ; et la décharge du gaz d'huile de craquage à travers la deuxième sortie de gaz (C5) ;
4) l'hydrocraquage de la fraction d'huile de queue et de l'hydrogène circulant dans le réacteur d'hydrocraquage (D) pour produire des produits d'hydrocraquage ; l'hydroisomérisation de la fraction de diesel et de l'hydrogène de renouvellement dans le réacteur d'hydroisomérisation (E) pour produire des produits d'hydroisomérisation ;
5) la décharge des produits d'hydrocraquage à travers la sortie de produit d'hydrocraquage (D1) ; la décharge des produits d'hydroisomérisation à travers la sortie de produit d'hydroisomérisation (E1) ; le mélange des produits d'hydrocraquage et des produits d'hydroisomérisation et l'entrée du mélange résultant dans la deuxième colonne de rectification (F) à travers l'entrée de mélange de produits d'hydrogénation (F1) ; la rectification du mélange de produits d'hydrocraquage et de produits d'hydroisomérisation pour produire du gaz d'huile de craquage, du kérosène d'aviation, du diesel, de la paraffine, la fraction d'huile de queue et la fraction de naphta dans la deuxième colonne de rectification (F) ; le guidage du kérosène d'aviation vers un réservoir de kérosène d'aviation à travers la sortie de kérosène d'aviation (F4), le guidage du diesel vers un réservoir de diesel à travers la sortie de diesel (F5) ; le guidage de la fraction de naphta vers un réservoir de fraction de naphta à travers la sortie de fraction de naphta (F3) ;
lorsque le kérosène d'aviation et le diesel sont les produits principaux, le guidage d'un mélange de la fraction d'huile de queue et de la paraffine le long du tuyau de décharge (F6) de la fraction d'huile de queue et de la paraffine pour l'introduction dans la première chambre de mélange (I) par le biais de l'entrée de fraction d'huile de queue (I3) et le mélange avec l'hydrogène circulant, puis l'entrée de celui-ci dans le réacteur d'hydrocraquage (D) ; lorsque la paraffine est le produit principal, la décharge du mélange de la fraction d'huile de queue et de la paraffine à travers la sortie de paraffine (F7) ; et la décharge du gaz d'huile de craquage produit à travers la troisième sortie de gaz (F2) de la deuxième colonne de rectification (F) ; et
6) le mélange et l'introduction du gaz d'huile de craquage déchargé aux étapes 2), 3) et 5) dans la colonne de fractionnement de condensation (G) par le biais de l'entrée de gaz (G1), pour obtenir du gaz et du liquide ; la décharge du gaz par la quatrième sortie de gaz (G2), puis l'entrée du gaz dans le réacteur d'hydroraffinage (A) par l'entrée de matière première (A1) pour une utilisation cyclique ; et la décharge du liquide par la sortie de liquide (G3), puis la convergence du liquide avec la fraction de naphta pour obtenir des matières de pyrolyse d'éthylène.

3. Procédé selon la revendication 2, **caractérisé en ce que** l'huile de synthèse Fischer-Tropsch utilisée à l'étape 1) comprend l'huile de synthèse Fischer-Tropsch basse température, ou l'huile de synthèse Fischer-Tropsch haute température, ou des distillats totaux ou partiels du mélange d'huile de l'huile de synthèse Fischer-Tropsch basse température et de l'huile de synthèse Fischer-Tropsch haute température.

4. Procédé selon la revendication 2, **caractérisé en ce qu'**à l'étape 1), des conditions de réaction dans le réacteur d'hydroraffinage (A) sont les suivantes : une température de réaction varie entre 260°C et 400°C ; une pression de réaction varie entre 2,0 MPa et 20,0 MPa ; une vitesse spatiale horaire du liquide varie entre 0,5 h⁻¹ et 3.0 h⁻¹ ; et un rapport volumique de l'hydrogène à l'huile varie entre 500:1 et 2000:1.

5. Procédé selon la revendication 2, **caractérisé en ce qu'**à l'étape 4), des conditions de réaction dans le réacteur d'hydroisomérisation (E) sont les suivantes : une température de réaction varie entre 280°C et 400°C ; une pression de réaction varie entre 4,0 MPa et 15,0 MPa ; une vitesse spatiale horaire du liquide varie entre 0,5 h⁻¹ et 3.0 h⁻¹; et un rapport volumique de l'hydrogène à l'huile varie entre 500:1 et 2000:1.

6. Procédé selon la revendication 2, **caractérisé en ce qu'**à l'étape 4), des conditions de réaction dans le réacteur d'hydrocraquage (D) sont les suivantes : une température de réaction varie entre 280°C et 450°C ; une pression de réaction varie entre 5,0 MPa et 20,0 MPa ; une vitesse spatiale horaire du liquide varie entre 0,5 h⁻¹ et 3.0 h⁻¹ ; et un rapport volumique de l'hydrogène à l'huile varie entre 500:1 et 2000:1.

7. Procédé selon la revendication 4, **caractérisé en ce qu'**à l'étape 1), les conditions de réaction dans le réacteur d'hydroraffinage (A) sont les suivantes : la température de réaction varie entre 280°C et 390°C ; la pression de réaction varie entre 4,0 MPa et 15,0 MPa ; la vitesse spatiale horaire du liquide varie entre 0,5 h⁻¹ et 2.0 h⁻¹ ; et le rapport volumique de l'hydrogène à l'huile varie entre 500:1 et 1500:1.

8. Procédé selon la revendication 5, **caractérisé en ce qu'**à l'étape 4), les conditions de réaction dans le réacteur d'hydroisomérisation (E) sont les suivantes : la température de réaction varie entre 280°C et 370°C ; la pression de réaction varie entre 5,0 MPa et 12,0 MPa ; une vitesse spatiale horaire du liquide varie entre 0,5 h⁻¹ et 2.0 h⁻¹ ; et le rapport volumique de l'hydrogène à l'huile varie entre 500:1 et 1500:1.

9. Procédé selon la revendication 6, **caractérisé en ce qu'**à l'étape 4), des conditions de réaction dans le réacteur d'hydrocraquage (D) sont les suivantes : la température de réaction varie entre 320°C et 400°C ; la pression de réaction varie entre 5,0 MPa et 15,0 MPa ; la vitesse spatiale horaire du liquide varie entre 0,5 h⁻¹ et 2.0 h⁻¹ ; et le rapport volumique de l'hydrogène à l'huile varie entre 700:1 et 1500:1.
